# FASCICULE DE BREVET EUROPEEN

(11) **EP 2 371 444 B1**
(45) Date de publication et mention de la délivrance du brevet: **20.02.2013**
(21) Numéro de dépôt: 10195391.7
(22) Date de dépôt: 16.12.2010
(51) Int. Cl.: B01D 53/50, B01D 53/68

(54) **Procédé et installation d'épuration de fumées contenant des polluants acides**
Verfahren und Anlage zur Reinigung von sauren Verunreinigungen enthaltenden Rauchgasen
Process and device for the purification of fumes containing acidic pollutants

(30) Priorité: 22.03.2010 FR 1052035
(43) Date de publication de la demande: 05.10.2011
(73) Titulaire: LAB SA, 69006 Lyon (FR)
(72) Inventeur: Siret, Bernard, 69200 VENISSIEUX (FR); Tabaries, Franck, 83190 OLLIOULES (FR)
(74) Mandataire: Grand, Guillaume

(56) Documents cités:
- EP-A2- 1 716 910
- WO-A1-88/06484
- WO-A1-92/15390
- GB-A- 2 049 635
- JP-A- 8 068 528

## Description

La présente invention concerne un procédé et une installation d'épuration de fumées contenant des polluants acides.

Au sens de l'invention, ces polluants acides comprennent notamment, mais non exclusivement, l'acide chlorhydrique et les oxydes de soufre. Ces polluants sont générés par de nombreuses activités industrielles, telles que les incinérateurs, les fours cimentiers ou les raffineries de pétrole. En effet, la combustion de matières fossiles, tout comme l'incinération de déchets, produit des fumées chargées en oxyde de soufre, en oxyde d'azote et en autres polluants acides. L'épuration de ces fumées représente donc un enjeu environnemental important. D'ailleurs, parmi les polluants émis, les oxydes de soufre représentent un défit important et plusieurs procédés sont employés pour les éliminer avant le rejet des fumées à l'atmosphère.

Principalement, trois classes de procédé sont actuellement disponibles. On connaît ainsi les procédés humides, dans lesquels les fumées sont mises en contact avec un liquide contenant un réactif de neutralisation. On connaît également les procédés semi-secs, dans lesquels on atomise une bouillie contenant un réactif de neutralisation qui va être évaporé puis collecté avec des sous-produits de réaction et les résidus sur un collecteur. Enfin, on dispose des procédés secs, dans lesquels les fumées à épurer sont mises en contact avec un réactif pulvérulent en vue de collecter, de manière similaire à ce qui se fait pour les procédés semi-secs, les produits issus de la réaction et les résidus sur un collecteur, par exemple un filtre à manches.

Il existe d'autres procédés d'épuration, de nature catalytique ou basés sur des solvants, de moindre importance industrielle. Dans tous les cas, chaque type de procédé présente ses avantages et ses inconvénients : les procédés secs, en particulier, sont souvent utilisés pour les installations de petites et moyennes tailles car elles offrent un excellent compromis performance/coût d'investissement et d'exploitation.

Si l'on s'intéresse plus en détail aux procédés secs, il est prévu, dans leur forme de base, qu'un réactif de neutralisation, tel que de la chaux, est injecté dans la veine gazeuse des fumées à épurer, pour que ce réactif réagisse avec les polluants acides présents. Les fumées épurées, ainsi que l'excès de réactif sont captés en aval. Cependant, pour avoir des performances attractives, on est amené à opérer dans une plage de températures limitée et, même dans ces conditions de température, l'obtention d'un rendement élevé d'épuration, notamment de désulfuration, requiert un excès important de réactifs. Pour améliorer cette situation, il est souvent préconisé de conditionner les fumées en en abaissant la température par divers moyens, comme l'injection d'eau liquide et son évaporation dans des tours de conditionnement ou bien directement dans la gaine de circulation des fumées. La première option conduit à des tours d'atomisation de dimensions importantes, et donc onéreuses, tandis que la seconde crée des risques de dépôt et d'encrassement dans la gaine où on injecte l'eau, ce qui crée des problèmes de maintenance et d'exploitation.

On peut par ailleurs abaisser la température des fumées à épurer par injection d'air froid, rendant ainsi le procédé plus efficace. Toutefois, cette solution est très peu attractive dès qu'il s'agit de réaliser un refroidissement de plus de 5 à 10°C en raison de l'augmentation du volume des fumées et des difficultés à bien mélanger les fumées et l'air froid. Ceci abaisse en outre l'humidité des fumées, ce qui est défavorable.

Une autre possibilité est de réaliser une recirculation des résidus après réactivation par humidification : US 6 213 629 en fournit un exemple. Pour ce faire, on pulvérise de l'eau sur les résidus recirculés. Cependant, pour des refroidissements de plus de 20°C, les quantités à recirculer sont considérables. De plus, la quantité d'eau à injecter doit être parfaitement maîtrisée en regard du débit des résidus solides recirculés : malgré cette précaution, les risques de colmatage sont réels au moment de la mise en contact des résidus solides, c'est-à-dire de cendres, avec l'eau pulvérisée. Enfin, le caractère encrassant et mottant de ces solides humidifiés est important.

Encore une autre possibilité est de placer dans le circuit d'alimentation en fumées à épurer un économiseur pour abaisser la température de ces fumées. Toutefois, ce type de solution, qui n'augmente pas l'humidité des fumées et qui ne réalise pas une humidification des cendres, n'est pas favorable pour la réaction de neutralisation et la captation des polluants acides.

Enfin, EP-A-1 716 910 et FR-A-2 911 518 ont proposé de réaliser un recyclage et une activation des résidus par de la vapeur d'eau, ce qui constitue une amélioration par rapport à une humidification par de l'eau liquide. Toutefois, cette solution ne suffit pas à élever beaucoup la teneur en humidité dans les fumées et ne contribue pas significativement à leur refroidissement.

Le but de la présente invention est de proposer un procédé et une installation d'épuration améliorés, qui concilient, de manière performante, activation des résidus recirculés, humidification de ces résidus et des fumées à épurer, et refroidissement des fumées à épurer.

A cet effet, l'invention a pour objet un procédé d'épuration de fumées contenant des polluants acides, notamment de l'acide chlorhydrique et/ou des oxydes de soufre, tel que défini à la revendication 1.

L'idée à la base de l'invention est, en quelque sorte, de renforcer l'intégration des traitements mis en oeuvre pour épurer les fumées contenant des polluants acides. Selon l'invention, avant d'envoyer les fumées à épurer à un séparateur gaz-solides, on en abaisse la température, en récupérant la chaleur qu'on a fait perde à ces fumées, pour générer de la vapeur d'eau dont au moins une fraction alimente la réaction d'activation d'une fraction des résidus solides issus du séparateur. Les produits de cette réaction d'activation, qui sont donc humides, sont recyclés vers le séparateur gaz-solides. Ainsi, l'invention réalise une réelle synergie opératoire puisqu'elle combine astucieusement, à la fois, un abaissement de la température des fumées à épurer, sans augmenter pour autant le flux volumique de ces fumées, une humidification de ces fumées, et une limitation de la quantité de réactif de neutralisation nécessaire grâce à l'activation des résidus recyclés. Avantageusement, selon deux modes de réalisation possibles selon l'invention, une fraction des fumées épurées sortant du séparateur peut ou non être retournée au séparateur via le réacteur d'activation.

D'autres caractéristiques additionnelles avantageuses du procédé conforme à l'invention, prises isolément ou selon toutes les combinaisons techniquement possibles, sont spécifiées aux revendications dépendantes 2 à 10.

L'invention a également pour objet une installation d'épuration des fumées, telle que définie à la revendication 11.

Des caractéristiques avantageuses additionnelles de cette installation sont spécifiées à la revendication dépendante 12.

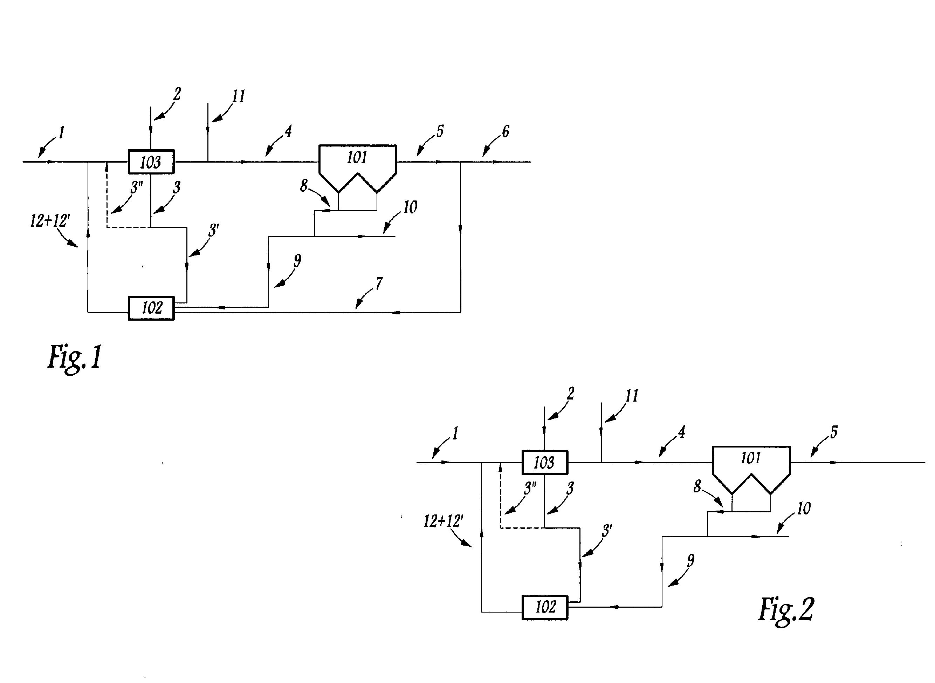

L'invention sera mieux comprise à la lecture de la description qui va suivre, donnée uniquement à titre d'exemple et faite en se référant aux figures 1 et 2 représentant schématiquement deux modes de réalisation d'une installation d'épuration conformes à l'invention.

Dans le mode de réalisation de la figure 1, un dispositif d'épuration de fumée 101, d'une technologie connue en soi et faisant office de séparateur gaz-solides, reçoit des fumées à épurer 1, ainsi qu'un apport de réactif frais 11. Ce réactif 11, dit de neutralisation, est par exemple de la chaux, en particulier à grande surface spécifique, de la magnésie, du carbonate de sodium et/ou encore du bicarbonate de sodium. Le séparateur 101 est, par exemple, un filtre à manches ou un électrofiltre.

En amont de ce séparateur 101, les fumées à épurer 1 circulent à travers un dispositif de génération de vapeur d'eau 103 : à titre d'exemple, ce générateur 103 est constitué d'un faisceau de tubes alimentés en eau 2 et placés dans la gaine véhiculant les fumées à épurer 1. Le générateur 103 est conçu pour transférer de la chaleur provenant des fumées à épurer 1, à l'eau 2 de manière à vaporiser cette dernière. Ainsi, pour des fumées à épurer 1 présentant, à l'entrée du générateur 103, une température comprise entre 120 et 250°C, de préférence entre 130 et 180°C, le générateur abaisse leur température de 5 à 40°C, tout en produisant de la vapeur d'eau 3 à une pression comprise entre 1 et 5 bars absolus. En pratique, la quantité de vapeur d'eau 3 produite par le générateur 103 est comprise entre 0,3 et 5% en masse de la quantité des fumées à épurer 1, la quantité de chaleur nécessaire à cette évaporation devant faire baisser la température des fumées de 5 à 40°C. Cet abaissement de température est le critère déterminant.

En sortie du séparateur 101, une partie 6 des fumées épurées 5 est dirigée vers un traitement complémentaire ou bien vers une cheminée d'évacuation, non représentée. Dans le même temps, la partie restante 7 des fumées épurées 5 est dirigée jusqu'à un réacteur d'activation gaz-solides 102, d'une technologie connue en soi. Pour ce faire, on utilise, de manière optionnelle, un ventilateur non représenté. Cette fraction de fumées épurées 7 représente entre 0,1 et 5% du débit total des fumées épurées 5, de préférence entre 0,3 et 1% de ce débit total.

Dans le même temps, également en sortie du séparateur 101, une partie 9 des résidus solides 8, qui contiennent encore du réactif non utilisé, est introduite dans le réacteur 102. La partie restante 10 des résidus solides 8 est par ailleurs évacuée de l'installation. En pratique, la fraction des résidus solides 9 admise dans le réacteur 102 est comprise entre 50 et 99%, de préférence entre 80 et 95%, du débit total des résidus solides 8 issus du séparateur 101.

Dans le réacteur 102, les résidus solides 9, contenant du réactif de neutralisation, sont soumis à une opération d'activation, mettant en oeuvre des ré-équilibrages de nature chimique, thermochimique et/ou thermodynamique. A titre d'exemple, le réacteur 102 est un lit fluidisé, un lit jaillissant ou un tambour rotatif.

Pour renforcer l'activation des résidus solides 9 dans le réacteur 102, au moins une partie 3' de la vapeur 3 produite par le générateur 103 est également admise dans le réacteur 102.

Les résidus solides activés 12, issus du réacteur 102, ainsi que les gaz 12' sortant de ce réacteur 102 sont, au moins en partie, retournés en amont du séparateur 101, de préférence en amont du générateur 103 comme représenté sur la figure 1. Avantageusement, les résidus 12 et les gaz 12' sont véhiculés conjointement dans une seule et même gaine.

On souligne que l'abaissement de température des fumées à épurer 1, obtenu par le générateur 103, combiné à l'augmentation d'humidité de ces fumées, provoquée par la ré-injection des gaz 12' sortant du réacteur 102, est particulièrement bénéfique à l'épuration des fumées par le séparateur 101. En pratique, on ajuste avantageusement l'un par rapport à l'autre le débit des fumées épurées 7 et le débit de la fraction 3' de la vapeur d'eau générée 3 de manière que le rapport (7/(7+3')) entre, d'une part, le débit des fumées épurées 7 et, d'autre part, le débit gazeux total alimentant le réacteur 102, autrement dit la somme des débits des fumées épurées 7 et de la fraction de vapeur d'eau 3', est compris entre 0,25 et 0,9, de préférence entre 0,5 et 0,8.

On notera qu'un des avantages de l'invention par rapport à l'art antérieur est que l'abaissement de température des fumées à épurer, obtenu par le générateur 103, est réalisé sans augmentation significative du flux de ces fumées, contrairement à ce qui se passerait en cas de dilution par de l'air. Autrement dit, l'augmentation du flux gazeux net 4 en entrée du séparateur 101, par rapport au flux des fumées à épurer 1, n'est que la quantité de gaz recyclé 12'.

A titre de variante optionnelle, indiquée en pointillés sur la figure 1, la partie restante 3" de la vapeur d'eau générée 3, non utilisée par le réacteur 102, est réintroduite en amont du séparateur 101, de préférence en amont du générateur 103, de façon à exploiter sa capacité à brasser les fumées à épurer. En effet, l'abaissement de température de 5 à 40°C à travers le générateur 103 peut conduire à la génération de davantage de vapeur d'eau qu'il n'est nécessaire au réacteur 102. Bien entendu, pour d'autres configurations, la fraction de vapeur d'eau 3' constitue la totalité de la vapeur d'eau 3 produite par le générateur 103.

L'invention selon son mode de réalisation illustré par la figure 1 peut être mieux comprise à l'aide de l'exemple suivant :
Une usine d'incinération d'ordures génère 100 000 Nm³/h de fumées à traiter 1, contenant entre autres de l'acide chlorhydrique et du dioxyde de souffre. Les fumées sont disponibles à 180°C. L'évaporation de 1850 kg d'eau est nécessaire pour abaisser la température des fumées à 145°C, point de fonctionnement choisi pour un filtre à manches constituant le séparateur 101. On souhaite que la composition des gaz entrant dans le réacteur 102 soit de 70% volumique en humidité. Par ailleurs, 700 Nm³/h des fumées épurées 5 sont extraits du séparateur 101 pour former le flux 7 allant au réacteur 102. La situation peut se résumer par le tableau ci-dessous :

| Référence du flux | 1 | 4 | 6 | 7 | Mélange | 3 | 3' |
|---|---|---|---|---|---|---|---|
| | | | | | 7+9 | | |
| Débit.............. Kg/h | 127 000 | 130 000 | 129 000 | 980 | 1 880 | 1 850 | 1 000 |
| Température.......°C | 180 | 145 | 145 | 145 | 137 | 132 | 132 |
| % H₂O........humidité | 14 | 15.9 | 15.9 | 15.9 | 70 | 100 | 100 |

Le flux de résidus solides 9 admis dans le réacteur 102 vaut 4 000 kg/h.

Dans cet exemple, on notera que la quantité de vapeur d'eau 3 saturée à 132°C, nécessaire à l'abaissement de température souhaité, est supérieure à la quantité dont a besoin le réacteur d'activation 102, à savoir 1 000 kg/h. L'excédent formant le flux 3", c'est-à-dire 850 kg/h, est retourné immédiatement en amont du générateur 103.

On notera également que la totalité des matières recyclées 12 et 12' ne contribue à augmenter que de 2,3% le flux massique des fumées 4 à l'entrée du séparateur 101 ((130 000 - 127000)/130 000), tout en diminuant de 5% leur flux volumique par abaissement de température.

Dans le mode de réalisation de la figure 2, on retrouve exactement la même installation que celle de la figure 1, à la seule différence qu'aucune fraction des fumées épurées 5 n'est envoyée au réacteur 102. Cela revient à dire que le mode de réalisation de la figure 2 correspond au mode de réalisation de la figure 1, dans lequel la fraction 7 des fumées épurées 5 est nulle, si bien que la totalité des fumées épurées 5 est évacuée de l'installation (comme c'est le cas pour la partie 6 de ces fumées épurées 5 sur la figure 1).

L'absence de recyclage d'une partie des fumées épurées 5 n'est pas préjudiciable à la réaction d'activation des résidus solides 9 au sein du réacteur 102, dans la mesure où au moins la partie 3' de la vapeur 3 fournit un flux gazeux suffisant pour alimenter le réacteur 102.

L'invention selon son mode de réalisation illustré par la figure 2 peut être mieux comprise à l'aide du même exemple que présenté plus haut, à la différence qu'aucun flux des fumées 5 n'est renvoyé au réacteur 102. La situation peut se résumer par le tableau ci-dessous.

| Référence du flux | 1 | 4 | 5 | 3 | 3' |
|---|---|---|---|---|---|
| Débit... Kg/h | 127 000 | 129 000 | 129 000 | 1850 | 1000 |
| Température... °C | 180 | 145 | 145 | 132 | 132 |
| %H₂O... humidité | 14 | 15.9 | 15.9 | 100 | 100 |

Ainsi, les différents modes de réalisation de l'invention permettent de réaliser les objectifs précédemment mentionnés. En particulier, l'invention permet de cumuler des bénéfices multiples, à savoir abaissement de température des fumées à épurer, humidification de ces fumées, diminution du flux volumique en entrée du séparateur, et diminution de la consommation du réactif grâce à l'activation des résidus solides recyclés.

## Revendications

1. Procédé d'épuration de fumées (1) contenant des polluants acides, notamment de l'acide chlorhydrique et/ou des oxydes de soufre,
**caractérisé en ce qu'**il comprend des étapes suivant lesquelles :
- on fait circuler les fumées à épurer (1), à une température comprise entre 120 et 250°C, de préférence entre 130 et 180°C, à travers un générateur de vapeur d'eau (103) de façon à abaisser la température de ces fumées à épurer de 5 à 40°C, tout en produisant de la vapeur d'eau (3) à une pression comprise entre 1 et 5 bars absolus,
- on alimente les fumées à épurer (1) sortant du générateur (103) à un séparateur gaz-solides (101) auquel on alimente également un réactif de neutralisation (11), notamment de la chaux, de la magnésie, du carbonate de sodium et/ou du bicarbonate de sodium,
- on admet dans un réacteur gaz-solides (102) :
• une fraction (9) des résidus solides (8) issus du séparateur (101),
• au moins une fraction (3') de la vapeur d'eau (3) produite par le générateur (103), et
• une fraction (7), éventuellement nulle, des fumées épurées (5) sortant du séparateur (101), cette fraction étant comprise entre 0% et 5% du débit total de ces fumées épurées, et
- on recycle vers le séparateur (101) au moins une partie des résidus solides (12) issus du réacteur (102) et au moins une partie des gaz (12') sortant de ce réacteur.

2. Procédé suivant la revendication 1, **caractérisé en ce qu'**aucune fraction des fumées épurées (5) sortant du séparateur (101) n'est admise dans le réacteur gaz-solides (102).

3. Procédé suivant la revendication 1, **caractérisé en ce que** la fraction (7) des fumées épurées (5) sortant du séparateur (101), qui est admise dans le réacteur gaz-solides (102), est comprise entre 0,1 et 5%, de préférence 0,3 et 1%, du débit total de ces fumées épurées.

4. Procédé suivant la revendication 3, **caractérisé en ce que** le rapport entre, d'une part, le débit des fumées épurées (7) qui sont admises dans le réacteur (102) et, d'autre part, le débit gazeux total (3' + 7) alimentant ce réacteur, est ajusté de façon à être compris entre 0,25 et 0,9, de préférence entre 0,5 et 0,8.

5. Procédé suivant l'une quelconque des revendications précédentes, **caractérisé en ce que** la totalité des résidus solides (12), issus du réacteur (102), et des gaz (12') sortant de ce réacteur est recyclée vers le séparateur (101).

6. Procédé suivant l'une quelconque des revendications précédentes, **caractérisé en ce que** les résidus solides (12), issus du réacteur (102), et les gaz (12') sortant de ce réacteur sont recyclés vers le séparateur (101), en étant introduits en amont du générateur (103).

7. Procédé suivant l'une quelconque des revendications précédentes, **caractérisé en ce que** les résidus solides (12), issus du réacteur (102), et les gaz (12') sortant de ce réacteur sont envoyés vers le séparateur (101) conjointement dans une même gaine.

8. Procédé suivant l'une quelconque des revendications précédentes, **caractérisé en ce que** la totalité du débit de vapeur d'eau (3) produite par le générateur (103) est admise dans le réacteur (102).

9. Procédé suivant l'une quelconque des revendications précédentes, **caractérisé en ce que** la quantité de vapeur d'eau (3) produite par le générateur (103) est comprise entre 0,3 et 5% en masse de la quantité de fumées à épurer (1) circulant à travers ce générateur.

10. Procédé suivant l'une quelconque des revendications précédentes, **caractérisé en ce que** la fraction de résidus solides (9) admise dans le réacteur (102) est comprise entre 50 et 99%, de préférence entre 80 et 95%, du débit total des résidus solides (8) issus du séparateur (101).

11. Installation d'épuration de fumées pour la mise en oeuvre du procédé conforme à l'une quelconque des revendications précédentes, comprenant :
- un générateur de vapeur d'eau (103) adapté pour produire de la vapeur d'eau (3) par transfert de chaleur provenant des fumées à épurer (1) circulant à travers ce générateur,
- un séparateur gaz-solides (101), qui, en entrée, est raccordé à la sortie en fumées à épurer (1) du générateur (103) et dans lequel débouchent des moyens d'alimentation en un réactif de neutralisation (11),
- un réacteur gaz-solides (102) qui, en entrée, est raccordé à la fois à la sortie en résidus solides (8) du séparateur (101) et à la sortie en vapeur d'eau (3) du générateur (103), ainsi que, éventuellement, à la sortie en fumées épurées (5) du séparateur (101),
- des moyens de recyclage d'au moins une partie des résidus solides (12) issus du réacteur (102) et d'au moins une partie des gaz (12') sortant de ce réacteur, ces moyens de recyclage étant mis en communication avec l'entrée du séparateur (101), de préférence via le générateur (103).

12. Installation suivant la revendication 11, **caractérisée en ce que** le générateur (103) est constitué par un faisceau de tubes alimentés en eau (2) et placés dans une gaine véhiculant les fumées à épurer (1).

## Claims

1. Process for the purification of fumes (1) containing acidic pollutants, especially hydrochloric acid and/or sulfur oxides,
**characterised in that** it comprises steps in which:
- the fumes to be purified (1) are circulated, at a temperature of from 120 to 250°C, preferably from 130 to 180°C, through a water vapour generator (103) in order to lower the temperature of the fumes to be purified by from 5 to 40°C while producing water vapour (3) at a pressure of from 1 to 5 bar absolute,
- the fumes to be purified (1) leaving the generator (3) are supplied to a gas/solids separator (101) to which there is also supplied a neutralising reagent (11), especially lime, magnesium oxide, sodium carbonate and/or sodium bicarbonate,
- there are admitted to a gas/solids reactor (102):
• a fraction (9) of the solid residues (8) from the separator (101),
• at least a fraction (3') of the water vapour (3) produced by the generator (103), and
• a fraction (7), which may be zero, of the purified fumes (5) leaving the separator (101), that fraction being from 0% to 5% of the total throughput of the purified fumes, and
- at least a portion of the solid residues (12) from the reactor (102) and at least a portion of the gases (12') leaving the reactor are recycled to the separator (101).

2. Process according to claim 1, **characterised in that** no fraction of the purified fumes (5) leaving the separator (101) is admitted to the gas/solids reactor (102).

3. Process according to claim 1, **characterised in that** the fraction (7) of the purified fumes (5) leaving the separator (101) which is admitted to the gas/solids reactor (102) is from 0.1 to 5%, preferably from 0.3 to 1%, of the total throughput of the purified fumes.

4. Process according to claim 3, **characterised in that** the ratio between, on the one hand, the throughput of the purified fumes (7) which are admitted to the reactor (102) and, on the other hand, the total gas throughput (3' + 7) supplying the reactor is adjusted so that it is from 0.25 to 0.9, preferably from 0.5 to 0.8.

5. Process according to any one of the preceding claims, **characterised in that** the totality of the solid residues (12) from the reactor (102) and of the gases (12') leaving the reactor is recycled to the separator (101).

6. Process according to any one of the preceding claims, **characterised in that** the solid residues (12) from the reactor (102) and the gases (12') leaving the reactor are recycled to the separator (101) by being introduced upstream of the generator (103).

7. Process according to any one of the preceding claims, **characterised in that** the solid residues (12) from the reactor (102) and the gases (12') leaving the reactor are sent to the separator (101) together in the same conduit.

8. Process according to any one of the preceding claims, **characterised in that** the totality of the throughput of water vapour (3) produced by the generator (103) is admitted to the reactor (102).

9. Process according to any one of the preceding claims, **characterised in that** the quantity of water vapour (3) produced by the generator (103) is from 0.3 to 5% by mass of the quantity of fumes to be purified (1) circulating through the generator.

10. Process according to any one of the preceding claims, **characterised in that** the fraction of solid residues (9) admitted to the reactor (102) is from 50 to 99%, preferably from 80 to 95%, of the total throughput of the solid residues (8) from the separator (101).

11. Installation for the purification of fumes for carrying out the process according to any one of the preceding claims, comprising:
- a water vapour generator (103) suitable for producing water vapour (3) by transfer of heat from the fumes to be purified (1) circulating through the generator,
- a gas/solids separator (101) which, at the inlet, is connected to the outlet for fumes to be purified (1) of the generator (103) and into which there open means for supplying a neutralising reagent (11),
- a gas/solids reactor (102) which, at the inlet, is connected both to the outlet for solid residues (8) of the separator (101) and to the outlet for water vapour (3) of the generator (103) as well as, optionally, to the outlet for purified fumes (5) of the separator (101),
- means for recycling at least a portion of the solid residues (12) from the reactor (102) and at least a portion of the gases (12') leaving the reactor, the recycling means being in communication with the inlet of the separator (101), preferably via the generator (103).

12. Installation according to claim 11, **characterised in that** the generator (103) is composed of a bundle of tubes which are supplied with water (2) and located in a conduit carrying the fumes to be purified (1).

## Patentansprüche

1. Verfahren zur Reinigung von Rauchgasen (1), die säurehaltige Schadstoffe, insbesondere Salzsäure und/oder Schwefeloxide enthalten,
**dadurch gekennzeichnet, dass** es die folgenden Schritte umfasst, bei denen:
- die zu reinigenden Rauchgase (1) bei einer Temperatur zwischen 120° und 250°, vorzugsweise zwischen 130° und 180°, durch einen Dampfgenerator (103) zirkuliert werden, um die Temperatur dieser zu reinigenden Rauchgase auf 5 bis 40°C abzusenken, wobei Wasserdampf (3) bei einem Druck zwischen 1 und 5 Bar absolut erzeugt wird,
- die aus dem Generator (103) austretenden zu reinigenden Rauchgase (1) einer Gas-Feststoff-Trennvorrichtung (101) zugeführt werden, der gleichfalls ein Neutralisierungs-Reaktionsmittel (11), insbesondere Kalk, Magnesium, Natriumkarbonat und/oder Natriumbikarbonat zugeführt wird,
- in einen Gas-Feststoff-Reaktor (102) eingeleitet wird:
• eine Fraktion (9) von aus der Trennvorrichtung (101) stammenden Festrestrückständen (8),
• mindestens eine Fraktion (3') von von dem Generator (103) erzeugtem Wasserdampf (3) und
• eine Fraktion (7), die gegebenenfalls null ist, von gereinigten Rauchgasen (5), die aus der Trennvorrichtung (101) austreten, wobei diese Fraktion zwischen 0% und 5% des GeSamtdurchsatzes dieser gereinigten Rauchgase ist, und
- mindestens ein Teil der Festrückstände (12), die aus dem Reaktor (102) stammen, und mindestens ein Teil des Gases (12'), die aus diesem Reaktor austreten, in die Trennvorrichtung (101) recycelt werden.

2. Verfahren nach Anspruch 1, **dadurch gekennzeichnet, dass** überhaupt keine Fraktion der gereinigten Rauchgase (5), die aus der Trennvorrichtung (101) austreten, in den Gas-Feststoff-Reaktor (102) geleitet wird.

3. Verfahren nach Anspruch 1, **dadurch gekennzeichnet, dass** die Fraktion (7) der aus der Trennvorrichtung (101) austretenden gereinigten Rauchgase (5), die dem Gas-Feststoff-Reaktor (102) zugeleitet wird, zwischen 0,1% und 5%, vorzugsweise 0,3% und 1%, des Gesamtdurchsatzes dieser Rauchgase beträgt.

4. Verfahren nach Anspruch 3, **dadurch gekennzeichnet, dass** das Verhältnis zwischen dem Durchsatz der gereinigten Rauchgase (7) einerseits, die in den Reaktor (102) geleitet werden, und dem gesamten Gasdurchsatz (3' + 7) andererseits, die diesen Reaktor versorgen, so eingestellt wird, dass es zwischen 0,25 und 0,9, vorzugsweise zwischen 0,5 und 0,8 liegt.

5. Verfahren nach einem beliebigen der vorhergehenden Ansprüche, **dadurch gekennzeichnet, dass** die Gesamtheit der aus dem Reaktor (102) stammenden Festrückstände (12) und der aus diesem Reaktor austretenden Gase (12') in die Trennvorrichtung (101) recycelt werden.

6. Verfahren nach einem beliebigen der vorhergehenden Ansprüche, **dadurch gekennzeichnet, dass** die vom Reaktor (102) stammenden Festrückstoffe (12) und die aus diesem Reaktor stammenden Gase (12') in die Trennvorrichtung (101) recycelt werden, indem sie stromaufwärts zu dem Generator (103) eingeführt werden.

7. Verfahren nach einem beliebigen der vorhergehenden Ansprüche, **dadurch gekennzeichnet, dass** die vom Reaktor (102) stammenden Festrückstoffe (12) und die aus diesem Reaktor stammenden Gase (12') zu der Trennvorrichtung (101) zusammen in einer selben Umhüllung geschickt werden.

8. Verfahren nach einem beliebigen der vorhergehenden Ansprüche, **dadurch gekennzeichnet, dass** die Gesamtheit des Durchsatzes an Wasserdampf (3), die von dem Generator (103) erzeugt wird, in den Reaktor (102) geleitet wird.

9. Verfahren nach einem beliebigen der vorhergehenden Ansprüche, **dadurch gekennzeichnet, dass** die Menge an von dem Generator (103) erzeugtem Wasserdampf (3) zwischen 0,3% und 5% Massenprozente der Menge an zu reinigenden Rauchgasen (1), die durch diesen Generator zirkulieren, liegt.

10. Verfahren nach einem beliebigen der vorhergehenden Ansprüche, **dadurch gekennzeichnet, dass** die Fraktion der in den Reaktor (102) geleiteten Festrückstände (9) zwischen 50% und 99%, vorzugsweise zwischen 80% und 95%, des Gesamtdurchsatzes der aus der Trennvorrichtung (101) stammenden Festrückstände (8) liegt.

11. Anlage zur Reinigung von Rauchgasen für die Durchführung des Verfahrens nach einem beliebigen der vorhergehenden Ansprüche, umfassend:
- einen Wasserdampf-Generator (103), der angepasst ist, Wasserdampf (3) durch Übertragung von Wärme zu erzeugen, die von den durch diesen Generator zirkulierenden, zu reinigenden Rauchgase (1) herrühren,
- eine Gas-Feststoff-Trennvorrichtung (101), die am Eingang an den Ausgang für zu reinigenden Rauchgase (1) des Generators (103) angeschlossen ist und in die Mittel zur Versorgung mit einem Neutralisations-Reaktionsmittel (11) münden,
- einen Gas-Feststoff-Reaktor (102), der am Eingang sowohl an den Ausgang für Festrückstände (8) der Trennvorrichtung (101) und an den Ausgang für Wasserdampf (3) des Generators (103) angeschlossen ist, sowie, gegebenenfalls, an den Ausgang für gereinigte Rauchgase (5) der Trennvorrichtung (101) angeschlossen ist,
- Mittel zum Recyceln mindestens eines Teils der Festrückstände (12), die aus dem Reaktor (102) stammen, und mindestens eines Teils des aus diesem Reaktor austretenden Gases (12'), wobei diese Mittel zum Recyceln mit dem Eingang der Trennvorrichtung (101), vorzugsweise über den Generator (103) in Verbindung stehen.

12. Anlage nach Anspruch 11, **dadurch gekennzeichnet, dass** der Generator (103) von einem Rohrbündel gebildet wird, das mit Wasser (2) versorgt wird und in einer Umhüllung angeordnet ist, in der die zu reinigenden Rauchgase (1) strömen.
